Europäisches Patentamt

European Patent Office

Office européen des brevets

(11) Veröffentlichungsnummer : **0 335 294 B1**

# (12) EUROPÄISCHE PATENTSCHRIFT

(45) Veröffentlichungstag der Patentschrift :
03.06.92 Patentblatt 92/23

(21) Anmeldenummer : 89105356.3

(22) Anmeldetag : 25.03.89

(51) Int. Cl.⁵ : **F16J 15/34,** C04B 35/00

(54) **Verfahren zur Herstellung von Gleitkörpern mit Hohlkammern.**

(30) Priorität : **30.03.88 DE 3810820**

(43) Veröffentlichungstag der Anmeldung :
**04.10.89 Patentblatt 89/40**

(45) Bekanntmachung des Hinweises auf die
Patenterteilung :
**03.06.92 Patentblatt 92/23**

(84) Benannte Vertragsstaaten :
**DE FR GB**

(56) Entgegenhaltungen :
**EP-A- 0 036 435**
**EP-A- 0 092 716**
**DE-B- 1 475 621**
**DE-B- 2 357 625**
**DE-C- 2 928 504**
**US-A- 3 870 776**

(73) Patentinhaber : **Hoechst CeramTec**
**Aktiengesellschaft**
**Wilhelmstrasse 14**
**W-8672 Selb (DE)**

(72) Erfinder : **Ciccarelli, Mario**
**Vorwerkstrasse 59**
**W-8672 Selb (DE)**
Erfinder : **Schelter, Heinrich**
**Unterweissenbach 75**
**W-8672 Selb (DE)**

(74) Vertreter : **Spiess, Bernhard et al**
**Hoechst AG Zentrale Patentabteilung**
**Postfach 80 03 20**
**W-6230 Frankfurt am Main 80 (DE)**

**Beschreibung**

Die Erfindung betrifft ein Verfahren zur Herstellung eines Gleitkörpers aus einem keramischen Material, insbesondere aus Si/SiC, für Gleitanordnungen, insbesondere für Gleitringdichtungen.

Axiale und radiale Gleitringdichtungen dienen in der Regel zur Abdichtung von umlaufenden Maschinenteilen gegen flüssige oder gasförmige Medien und weisen meist einen feststehenden und einen umlaufenden Gleitring auf, die mit einem Federelement gegeneinander gedrückt werden. Die Gleitringe bilden einen Dichtspalt, in dem die Gleitflächen der Gleitringe sich gegenüberliegend angeordnet sind. Im Betrieb der Dichtung soll sich im Dichtspalt ein flüssiges Dichtmittel befinden, das unter Druckgefälle steht. Für schwierige Abdichtungsfälle, z.B. bei Maschinen mit einem sehr hohen oder sehr niedrigen Innendruck, können beispielsweise axiale Gleitringdichtungen eingesetzt werden, die eine hydrostatisch-hydrodynamische Dichtung gewährleisten und gleichzeitig die Gleitringdichtung entlasten. Dies wird erreicht durch Einbringen sogenannter Hydrodynamisierungsvertiefungen in den Gleitring (DE-B-1 475 621 und DE-C-2 928 504). Bei hohen Drücken und Temperaturen sind besondere Maßnahmen zur Kühlung der Gleitringe erforderlich. In diesem Zusammenhang ist es bekannt, Kühlmittelkanäle in Gleitringkörpern vorzusehen, die von einem Kühlmittel durchströmt werden (CH-B 413 522). Sowohl das Einbringen von Hydrodynamisierungsvertiefungen als auch von Kühlmittelkanälen ist insbesondere bei keramischen Gleitringdichtungen sehr schwierig und aufwendig und nur mit erheblichem Aufwand möglich. Dieses Problem konnte dadurch gelöst werden, daß man den keramischen Gleitring mit komplizierter Innenstruktur aus einzelnen ungebrannten Folien, sogenannten "Grünfolien", aufbaut, in die die gewünschten Kanäle, Löcher, Vertiefungen etc. bereits beispielweise durch Ausstanzen eingebracht sind, und den geschichteten Gleitring dann in bekannter Weise zum fertigen, kompakten Körper brennt. Ein solches Verfahren ist beispielsweise beschrieben in der EP-A-00 92 716. Jedoch weist dieses Verfahren insbesondere dann Nachteile auf, wenn ein Gleitkörper sowohl aus einem massiven Grundkörper als auch aus einem in "Folientechnik" erstellten Teil zusammengesetzt und zu einem fertigen Körper gebrannt wird. An der Laminierstelle zwischen massivem Grundkörper und "Folienkörper" entsteht aufgrund nicht idealer Zusammensinterung der beiden Teile eine Schwachstelle, an der der Gleitkörper im späteren Einsatz oder - bei Verwendung von SiC - schon beim Silicieren auseinanderbrechen kann. Dies ist offenbar darauf zurückzuführen, daß die keramische Masse für die beiden Teile unterschiedlich aufbereitet wird, daß beispielsweise der Anteil der organischen Bestandteile in dem Folienkörper größer ist, als in dem massiven Grundkörper, der meist trockengepreßt wird. Bei dem Verfahren gemäß EP-A-0 092 716 können die ausgestanzten Folienreste, die bei der Herstellung des ungebrannten Folienkörpers anfallen, dem Gießschlicker zugesetzt werden. Soweit damit der massive (nicht strukturierte) ungebrannte Grundkörper hergestellt werden soll, ist der Aufbau aus dünnen Elementen aufwendig. Es wird nicht angegeben, daß der Gießschlicker ausschließlich aus Abfällen hergestellt werden kann.

Aufgabe der Erfindung ist es, Gleitkörper mit komplizierter Innenstruktur aus einem massiven Grundkörper und einem Folienkörper herzustellen, wobei die Laminierstelle zwischen diesen beiden Körpern so gut ist, daß der Gleitkörper weder beim Silizieren noch im Betrieb an dieser Stelle bricht, wodurch die Bauteilzuverlässigkeit erheblich gesteigert wird.

Diese Aufgabe wird einmal gelöst durch ein Verfahren zur Herstellung eines keramischen Gleitkörpers mit Hohlkammern, wobei man aus einzelnen ungebrannten keramischen Folien Karten ausstanzt, die mindestens teilweise Löcher enthalten, man aus ihnen einen ungebrannten, Hohlkammern aufweisenden Folienkörper unter Anwendung eines Laminierhilfsmittels und Druck zusammenlaminiert und den Folienkörper mit einem ungebrannten Grundkörper, der frei ist von Hohlkammern, unter Anwendung eines Laminierhilfsmittels und Druck zusammenlaminiert, in dem so erhaltenen ungebrannten Körper die organischen Bestandteile durch Erhitzen entfernt und den Körper dann brennt, bzw. siliziert, wobei die bei der Herstellung des ungebrannten Folienkörpers anfallenden Folienreste in einer Mühle zu pulverförmiger Konsistenz zerkleinert werden und der ungebrannte von Hohlräumen freie Grundkörper aus diesem Pulver durch Verpressen hergestellt wird.

Die Aufgabe wird ferner gelöst durch ein Verfahren zur Herstellung eines keramischen Gleitkörpers mit Hohlkammern, wobei man aus einzelnen ungebrannten keramischen Folien Karten ausstanzt, die teilweise Löcher aufweisen, man die Karten nacheinander mit einem ungebrannten Grundkörper, der frei ist von Hohlkammern, unter Anwendung von Laminierhilfsmitteln und Druck zusammenlaminiert, so daß ein Hohlkammern aufweisende ungebrannter Folienkörer im Verbund mit dem Grundkörper entsteht, man in dem so erhaltenen ungebrannten Körper die organischen Bestandteile durch Erhitzen entfernt und den Körper dann brennt, bzw. siliziert, wobei die bei der Herstellun des ungebrannten Folienkörpers anfallenden Folienreste in einer Mühle zu pulverförmiger Konsistenz zerkleinert werden und der ungebrannte, von Hohlkörpern freie Grundkörper aus diesem Pulver durch Verpressen hergestellt wird.

Gegenüber dem Verfahren der EP-A- 0 092 716 werden erfindungsgemäß die ausgestanzten Reste nicht in den Schlicker gegeben, sondern nach dem Zerkleinern gepreßt. Dieses Verfahren ist zur Herstellung mas-

2

siver Körper einfacher. Vorteilhaft ist ferner, daß die Verwertung der Reste nicht mehr das Arbeiten mit Lösemitteln erfordert.

Unter einem keramischen Gleitkörper mit Hohlkammern werden Gleitkörper, insbesondere Gleitringe verstanden, in deren Innern sich Hohlräume befinden, wodurch im Betrieb hydrodynamische Vertiefungen auf der Gleitfläche entstehen oder in deren Innern sich Löcher, konzentrische Kammern oder dergleichen befinden. Gleitringe mit solch kompliziertem Innenaufbau sind beispielsweise in der EP-A-0 092 716 beschrieben. Als keramische Materialien kommen z.B. in Betracht:
siliziuminfiltriertes Siliziumcarbid (Si/SiC), Aluminiumoxid, Glaskeramik, Hartstoffe wie Wolframcarbid, Hartmetalle, Sintermetalle oder Graphit, insbesondere siliziuminfiltriertes Siliziumcarbid. Für Folienkörper besonders vorteilhaft sind Keramikfolien, die z.B. in der DE-B-2 357 625, US-A-3 870 776 oder der EP-A-0 036 435 beschrieben werden.

Die Herstellung von kompliziert geformten Formkörpern, insbesondere Folienkörpern in Gestalt von Gleitringen ist beispielsweise beschrieben in der EP-A-0 092 716. Dabei werden die ungebrannten Folien nach allgemein bekannten Methoden durch Vergießen eines Schlickers auf einem Band hergestellt. Die Schlicker bestehen aus entsprechenden keramischen Pulvern, die mit organischen Bindemitteln, Dispergier- und Verdünnungsmitteln und ggf. Weichmachern und Hilfsmitteln wie Ölen, vermischt werden. Die vorgetrockneten Folien werden geschnitten und aus den entstandenen Karten die gewünschten Formen z.B. Ringe ausgestanzt. In diese ausgestanzten Formen können dann wiederum die nötigen Löcher, Ringsegmente oder beliebige andere Ausnehmungen eingestanzt oder geprägt werden.

Die ausgestanzten bzw. geprägten Folien werden dann zu einem Gleitkörper aufgebaut, wobei das Zusammenlaminieren der Einzelschichten mit Hilfe einer Laminierpresse erfolgt. Bei dem Laminierungsvorgang verwendet man eine Preßvorrichtung. Der angewendete Preßdruck richtet sich nach dem Organikgehalt und der Art der Laminierhilfsmittel. Für den Laminiervorgang benutzt man entweder eine keramische Paste, die vorzugsweise einen keramischen Füllstoff enthält oder rein organische Klebemittel, welche durch Siebdrucken, Sprayen oder Rollen aufgetragen werden. Die Anwendung des Laminierhilfsmittels bringt mehrere Vorteile mit sich, so werden niedrige Drucke beim Laminiervorgang ermöglicht, wodurch eine Verformung der Hohlkammern vermieden wird. Weiterhin wird die Welligkeit der Folien ausgeglichen.

Der massive ungebrannte Grundkörper, der später zusammen mit dem Folienkörper den fertigen ungebrannten Gleitkörper ergibt, wird nun erfindungsgemäß aus dem gleichen ungebrannten keramischen Material hergestellt, aus dem auch der Folienkörper hergestellt wird, d.h., der Schlicker für den ungebrannten massiven Grundkörper hat dieselbe Zusammensetzung wie der Schlicker für die Folien und wird auch unter identischen Bedingungen vorgetrocknet. Insbesondere die organischen Bestandteile der Folienmassen und der Massen für den ungebrannten massiven Grundkörper sollen chemisch und mengenmäßig nahezu identisch sein.

Es war völlig unerwartet, daß sich aus diesem Folienmaterial die ungebrannten massiven Grundkörper pressen lassen, da der Fachmann annehmen mußte, daß der Anteil der organischen Bestandteile in den Folienmassen zu groß ist, um daraus massive Grundkörper direkt zu pressen. Üblicherweise muß beispielsweise beim Trockenpressen der organische Anteil geringer sein.

Das erfindungsgemäße Verfahren ist deshalb besonders wirtschaftlich, weil Folienreste verwendet werden können, die beim Ausstanzen der verschiedenartigen Formen aus den Folien, die für den Aufbau des hohlkammernaufweisenden Folienkörpers dienen, anfallen.
Diese Folienreste werden beispielsweise in einer Schlagmühle zermahlen und auf Korngrößen von 40-400 µm abgesiebt. Das Pulver wird dann in einer Presse z.B. eine Trockenpresse oder durch isostatisches Pressen in die Form des ungebrannten massiven Grundkörpers, beispielsweise eines Gleitrings, gebracht. Bevorzugt wird das Pulver trocken gepreßt bei Drücken von 1500 bis 2000 bar, bevorzugt 1600 bis 1800 bar, wobei der Preßdruck in diesem Bereich so gewählt wird, daß die Dichte des ungebrannten massiven Grundkörpers der Dichte des ungebrannten Folienmaterials entspricht.

Der so erhaltene Grundkörper kann, sofern erforderlich, beispielsweise durch Drehen, Fräsen, Bohren oder Sägen nachbehandelt werden, so daß er die gewünschte äußere Kontur erhält.
Auf den so erhaltenen ungebrannten massiven Grundkörper wird nun der Folienkörper auflaminiert. Dies kann - je nach Anforderung - auf verschiedene Art und Weise erfolgen. So kann zunächst der Folienkörper für sich aufgebaut und dann als Ganzes auf den Grundkörper auflaminiert werden oder es werden zwei Folienkörper getrennt aufgebaut und dann beispielsweise von unten und von oben auf den Grundkörper auflaminiert. Eine weitere Möglichkeit besteht darin, den Folienkörper durch Auflaminieren von einzelnen Folien auf den Grundkörper aufzubauen. Dieses Auflaminieren auf den Grundkörper kann ebenso von oben und von unter erfolgen.
Das Auflaminieren der Einzelfolien bzw. des oder der Folienkörper auf den massiven Grundkörper geschieht mit Hilfe einer Laminierpresse, wobei als Laminierhilfsmittel keramische Pasten zusammen mit organischen Klebemitteln oder auch rein organische Klebemittel verwendet werden. Solche Pasten sind beispielsweise beschrieben in der EP-A-0 092 716 Anschließend erfolgt das Ausheizen der organischen Bestandteile bis auf 40-60 %, was eine zusätzliche Rohfestigkeit des aus Folienkörper und massivem Grundkörper aufgebauten Gleitkörpers bewirkt. Damit wird erreicht, daß der "halbgrüne" Gleitkörper gut bearbeitbar ist. Danach erfolgt das Ausheizen der restlichen organischen Bestandteile und das Sintern bzw. Silizieren des Gleitkörpers zwischen 1200 und 2200 °C. Eventuell ist noch eine Nachbearbeitung in Form von Schleifen, Läppen und/oder Polieren notwendig.

Die erfindungsgemäß hergestellten gebrannten Gleitkörper lassen

– eine Dicke der Laminierstelle zwischen Folienkörper und massivem Grundkörper von 10-100 µm, bevorzugt von 10-50 µm und

– nahezu identische, bevorzugt identische Korngrößen und Korngrößenverteilung (Korngrößenspektrum) des keramischen Materials in dem Folienkörper und in dem massiven Grundkörper, zu.

Da in ungebranntem Zustand sowohl der Folienkörper als auch der massive Grundkörper aus dem selben Material aufgebaut sind und gleiche Dichten und als Folge davon gleiche Schwindung aufweisen, verhält sich der zusammengesetzte - und zusammengesinterte - Gleitkörper vollkommen homogen, d.h. insbesondere an der kritischen Laminierstelle zwischen Folienkörper und massivem Grundkörper treten keine Spannungen mehr auf, die die Bauteilzuverlässigkeit negativ beeinflussen.

Das erfindungsgemäße Verfahren wird nunmehr anhand eines Ausführungsbeispiels erläutert.

**Beispiel**

Herstellung eines Gleitrings aus infiltriertem SiC

Für die Herstellung des keramischen Gießschlickers werden

```
        90 Gew.-% SiC-Pulver (Körnung: 1-90 µm)
und   10 Gew.-% Graphitpulver (spez. Oberfläche: 15-25 m²/g)
      100 Gew.-% feste keramische Masse
```

mit (die folgenden Gew.-%-Angaben beziehen sich auf 100 Gew.-% feste keramische Masse)

24    Gew.-% Ethanol

10    Gew.-% Toluol

1    Gew.-% Menhaden-Oil

8    Gew.-% Polyvinylbutyral

5    Gew.-% Palatinol® (= Di-2-Ethylhexylphthalat)

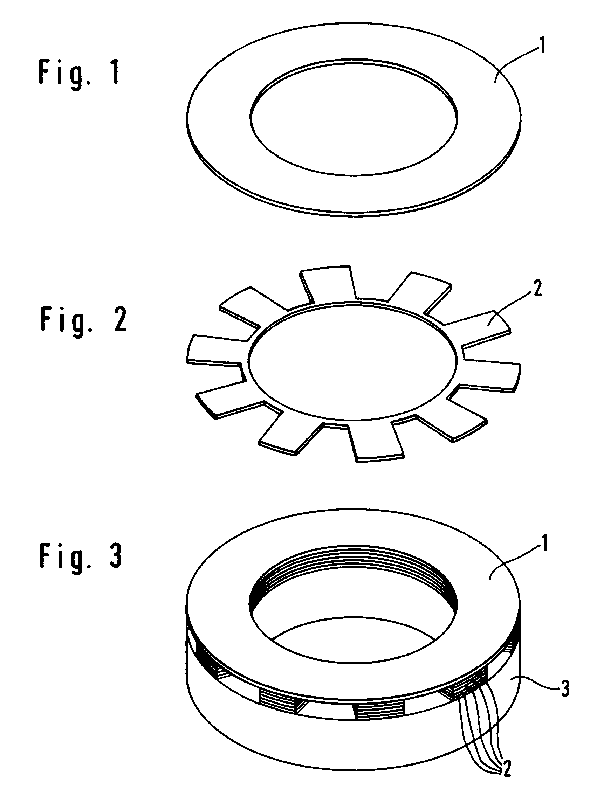

in einer Trommelmühle mit $Al_2O_3$-Kugeln 20 Stunden vermischt. Der Schlicker wird dann evakuiert, um eingetragene Luft zu entfernen. Das Verziehen des Schlikers zur Folienherstellung erfolgt auf einem Stahlband nach dem Doctor-Blade Prozess. Die Schlickerzugabe geschieht über einen Gießschuh, wobei die Foliengießstärke über den variablen Spalt am Gießschuh auf 0,8-1,0 mm eingestellt wird. Die Folie wird dann nach Durchlaufen einer Trockenstrecke vom Stahlband abgezogen und zu Karten von 180 mm x 180 mm geschnitten. Aus diesen Karten werden Ringe (1) mit einem Außendurchmesser von 159 mm und einem Innendurchmesser von 100 mm ausgestanzt (s. Figur 1). Aus einem Teil dieser Ringe werden dann noch pro Ring 10 Ringsegmente derart ausgestanzt, daß nur noch ein innerer durchgehender Ring mit einer Ringstärke von 3 mm übrigbleibt (segmentierter Ring (2); s. Figur 2). 5 dieser segmentierten Ringe (2) werden nun nach Auftragen einer Laminierpaste (Laminierhilfsmittel) so übereinandergestapelt, daß jeweils die einzelnen Ringsegmente übereinander zu liegen kommen. Als Laminierhilfsmittel wird eine Paste folgender Zusammensetzung verwendet:

```
        90 Gew.-% SiC (Körnung 1-60 µm)
und   10 Gew.-% Graphit (spez. Oberfläche: 15-25 m²/g)
      100 Gew.-% feste keramische Masse
```

vermischt mit (die folgenden Gew.-%-Angaben beziehen sich auf

100 Gew.-% feste keramische Masse)

50 Gew.-% ungesättigter Alkohol ($\alpha$-Terpiniol ($C_{10}H_{18}O$))

70 Gew.-% Polyvinylbutyral

20 Gew.-% Weichmacher (Palatinol).

Der Aufdruck der Paste auf die segmentierten Ringe erfolgt im Siebdruckverfahren. In einer Laminierpresse werden die Ringscheiben dann bei einem Druck von 1-5 bar zwischen Raumtemperatur und 80 °C zusammengepreßt. Dieses segmentierte Ringpaket wird mit einer ringförmigen Einzelfolie (1) abgedeckt, die ebenfalls auflaminiert wird.

Zur Herstellung des massiven Grundkörpers werden Folienschnitzel, die beim Ausstanzen der Ringe und Segmente angefallen sind, in einer Schlagmühle zerkleinert und auf 40-400 μm abgesiebt. Das resultierende Pulver hat folgende Korngrößenverteilung:

```
zwischen 400 und 315 μm    1,06   Gew. %
   "     315 und 250 μm    1,31    "
   "     250 und 200 μm    1,67    "
   "     200 und 100 μm    0,97    "
   "     100 und  80 μm   17,67    "
   "      80 und  63 μm   26,97    "
   "      63 und  50 μm   33,16    "
   "      50 und  40 μm   10,81    "
   "      40 und  20 μm    3,13    "
   "      20 und   1 μm    3,25    "
```

Dieses Pulver wird in einer Trockenpresse bei einem Druck von 1500 bar zu einem massiven Ring (3) (s. Figur 3) mit folgenden Abmessungen gepreßt:

Innendurchmesser   100 mm

Außendruchmesser  159 mm

Dicke               24,5 mm

Auf diesen massiven Ring wird der oben beschriebene Folienring auflaminiert, wobei wie oben beschrieben verfahren wird (Aufbringen der Laminierpaste, Auflaminieren des Ringpakets in einer Laminierpresse bei 1-5 bar). Der ungebrannte Körper erhält dabei die in Figur 3 dargestellt Form.

Anschließend wird der ungebrannte Körper zunächst bei ca. 180°C ausgeheizt, wobei sich ein Teil der organischen Bestandteile verflüchtigt. Der so erhaltene "Halbgrünkörper" wird mit Diamantwerkzeugen überdreht. Dann erfolgt der zweite Ausheizschritt bei einer Temperatur von 180-300 °C und anschließend das Silizieren bei 1600 °C, wobei sich aus dem im Körper verhandenen Kohlenstoff sekundäres SiC bildet und die offenen Poren mit Silicium gefüllt werden. Das Ergebnis dieses Verfahrens ist ein homogener, einstückiger Gleitring, der sich durch eine gleichmäßige Festigkeit auszeichnet. Der Gleitring wird dann noch - je nach Verwendung - geschliffen, geläppt und/oder poliert.

## Patentansprüche

1. Verfahren zur Herstellung eines keramischen Gleitkörpers mit Hohlkammern, wobei man aus einzelnen ungebrannten keramischen Folien Karten ausstanzt, die mindestens teilweise Löcher enthalten, man aus ihnen einen ungebrannten Hohlkammern aufweisenden Folienkörper (2) unter Anwendung eines Laminierhilfsmittels und Druck zusammenlaminiert und den Folienkörper (2) mit einem ungebrannten Grundkörper (3), der frei ist von Hohlkammern, unter Anwendung eines Laminierhilfsmittels und Druck zusammenlaminiert, in dem so erhaltenen ungebrannten Körper die organischen Bestandteile durch Erhitzen entfernt und den Körper dann brennt, bzw. siliziert, dadurch gekennzeichnet, daß die bei der Herstellung des ungebrannten Folienkörpers (2) anfallenden Folienreste in einer Mühle zu pulverförmiger Konsistenz zerkleinert werden und daß der ungebrannte von Hohlräumen freie Grundkörper (3) aus diesem Pulver durch Verpressen hergestellt wird.

2. Verfahren zur Herstellung eines keramischen Gleitkörpers mit Hohlkammern, wobei man aus einzelnen ungebrannten keramischen Folien karten ausstanzt, die teilweise Löcher aufweisen, man die karten nacheinander mit einem ungebrannten Grundkörper (3), der frei ist von Hohlkammern, unter Anwendung von Laminierhilfsmitteln und Druck zusammenlaminiert, so daß ein Hohlkammern aufweisender ungebrannter Folienkörper (2) im Verbund mit dem Grundkörper (3) entsteht, man in dem so erhaltenen ungebrannten Körper die organischen Bestandteile durch Erhitzen entfernt und den Körper dann brennt, bzw. siliziert, dadurch gekennzeichnet, daß die bei der Herstellung des ungebrannten Folienkörpers (2) anfallenden Folienreste in einer Mühle zu pulverförmiger Konsistenz zerkleinert werden und daß der ungebrannte, von Hohlkörpern freie Grundkörper (3) aus diesem Pulver durch Verpressen hergestellt wird.

3. Verfahren nach Anspruch 1 oder 2, dadurch gekennzeichnet, daß die Folienreste auf Korngrößen von 40-400 μm zerkleinert werden.

4. Verfahren nach Anspruch 1 oder 2, dadurch gekennzeichnet, daß der Preßdruck bei der Herstellung des ungebrannten, von Hohlräumen freien Grundkörpers (3) aus den pulverförmigen Folienresten 1500 bis 2000 bar (= 150-200 MPa) beträgt.

## Revendications

1. Procédé de fabrication d'un corps coulissant céramique comportant des cavités creuses, dans lequel on découpe, à partir de feuilles céramiques individuelles non-cuites des cartes contenant au moins partiellement des trous ; à partir de ces derniers, on stratifie un corps en feuilles (2), non-cuit, comportant des cavités creuses, et ce par utilisation d'un auxiliaire de stratification et sous pression ; et, par utilisation d'un auxiliaire de stratification et sous pression, on obtient par stratification le corps en feuilles (2), comportant un corps de base (3) non-cuit lequel est exempt de cavités creuses ; et, dans le corps non-cuit ainsi obtenu, on élimine par chauffage les constituants organiques, puis on cuit ou silicie le corps ; caractérisé en ce que les résidus de feuilles, obtenus lors de la fabrication du corps en feuilles non-cuit (2), sont broyés dans un broyeur jusqu'à une consistance pulvérulente, et que le corps creux (3), non-cuit, exempt de cavités creuses, est réalisé à partir de cette poudre par compression.

2. Procédé de fabrication d'un corps coulissant céramique comportant des cavités creuses, dans lequel, à partir de feuilles céramiques individuelles non-cuites, on découpe des cartes présentant partiellement des trous ; on stratifie les cartes les unes après les autres, comportant un corps de base non-cuit (3), lequel est exempt de cavités creuses, par utilisation d'auxiliaires de stratification et sous pression, de façon à former un corps en feuilles (2), non-cuit, présentant des cavités creuses, associé au corps de base (3) ; dans le corps non-cuit ainsi obtenu, on élimine par chauffage les constituants organiques, puis on cuit ou silicie le corps ; caractérisé en ce que les résidus de feuilles obtenus lors de la fabrication du corps en feuilles non-cuit (2) sont broyés dans un broyeur jusqu'à une consistance pulvérulente, et que le corps de base (3) non-cuit, exempt de cavités creuses, est réalisé à partir de cette poudre, par compression.

3. Procédé selon la revendication 1 ou 2, caractérisé en ce que les résidus de feuilles sont broyés à des granulométries de 40-400 μm.

4. Procédé selon la revendication 1 ou 2, caractérisé en ce que la pression de compression, lors de la fabrication du corps de base (3) non-cuit et exempt de cavités creuses, à partir des résidus de feuilles pulvérulents est de 1500 à 2000 bar (= 150-200 MPa).

## Claims

1. A process for producing a ceramic sliding body containing hollow chambers, in which process cards which, at least in some cases, contain holes are punched out of individual unfired ceramic films, the cards are laminated together by applying a lamination aid and pressure to form an unfired film body (2) having hollow chambers and the film body (2) is laminated together by applying a lamination aid and pressure with an unfired parent body (3) free of hollow chambers, the organic constituents in the unfired body obtained in this way are removed by heating and the body is then fired or siliconized, which process comprises comminuting the film reclaim obtained in producing the unfired film body (2) in a mill to a pulverulent consistency and producing the unfired parent body (3) free of cavities from said powder by pressing.

2. A process for producing a ceramic sliding body containing hollow chambers, in which process cards which in some cases contain holes are punched out of individual unfired ceramic films, the cards are laminated together by applying lamination aids and pressure with an unfired parent body (3) free of hollow chambers so that an unfired film body (2) having hollow chambers together with the parent body (3) is obtained, the organic constituents in the unfired body obtained in this way are removed by heating and the body is then fired or siliconized, which process comprises comminuting the film reclaim obtained in producing the unfired film body (2) in a mill to a pulverulent and producing the unfired parent body (3) free of cavities from said powder by pressing.

3. The process as claimed in claim 1 or 2, wherein the film reclaim is comminuted to particle sizes of 40-400 μm.

4. The process as claimed in claim 1 or 2, wherein the ram pressure in producing the unfired parent body (3) free of cavities from the pulverulent film reclaim is 1500 to 2000 bar (= 150-200 MPa).

Fig. 1

Fig. 2

Fig. 3